# EUROPEAN PATENT APPLICATION

(11) **EP 4 716 175 A1**
(43) Date of publication of application: **25.03.2026**
(21) Application number: 24822207.7
(22) Date of filing: 18.01.2024
(51) Int. Cl.: H04L 45/247

(54) **MESSAGE ADVERTISEMENT METHOD, APPARATUS, STORAGE MEDIUM AND ELECTRONIC APPARATUS**

(30) Priority: 15.06.2023 CN 202310716664
(71) Applicant: ZTE CORPORATION, Shenzhen, Guangdong 518057 (CN)
(72) Inventor: ZHANG, Zheng, Shenzhen, Guangdong 518057 (CN); XU, Benchong, Shenzhen, Guangdong 518057 (CN)
(74) Representative: Pennacchio, Salvatore Giovanni
(86) International application number: PCT/CN2024/073121
(87) International publication number: WO 2024/255246

(57) **Abstract**

Provided are a message advertisement method and apparatus, a storage medium, and an electronic device. The method comprises: adding an Anycast BFR-ID corresponding to dual-homing BFER devices to a TLV field of a first advertisement protocol message, so as to obtain a second advertisement protocol message, wherein the dual-homing BFER devices comprise a first BFER device and a second BFER device; the dual-homing BFER devices are configured to forward multicast traffic to a same receiving device; and the advertisement protocol message comprises a bit-forwarding router prefix (BFR-Prefix) of the first BFER device or the BFR-Prefix of the second BFER device; and advertising the second advertisement protocol message to other devices within a domain.

## Description

### Technical Field

The present invention relates to the field of communications, in particular to a message advertisement method and apparatus, a storage medium, and an electronic device.

### Background

With the rapid development of Internet services, multicast technology has been applied more and more widely. Bit Indexed Explicit Replication (BIER) is a multicast data forwarding technology. In this technology, each node at the network edge is represented by a single bit. When multicast traffic is transmitted in an intermediate network, an additional specific BIER header will be encapsulated. This packet header marks all destination nodes of the multicast stream in the form of a bit string (BitString). Intermediate network forwarding nodes look up a BIER forwarding table based on the bits to perform routing, ensuring that the traffic can be delivered to all the destination nodes. Generally, each BFER is assigned a corresponding BFR-ID value, and this value is advertised together with the BFR-Prefix of the BFER itself. The advertisement protocols are usually routing protocols such as Open Shortest Path First (OSPF), Intermediate System-to-Intermediate System (IS-IS), Border Gateway Protocol (BGP), or BABEL. Relying on the advertisement and routing calculation functions of these protocols, BIER forwarding table entries are calculated. Each entry of the forwarding table includes elements such as the BFR-ID for reaching each BFER and the corresponding next hop.

Bit-Forwarding Egress Routers (BFERs) are egress nodes of a BIER domain and are connected to downstream devices or receivers that need to receive multicast traffic. A Bit-Forwarding Ingress Router (BFIR) is an ingress node of the BIER domain and encapsulates the bits corresponding to the relevant BFERs into a BitString of the BIER packet according to specific conditions of a receiver of the multicast flow. Intermediate devices in the BIER domain will forward the packet to a corresponding BFER device.

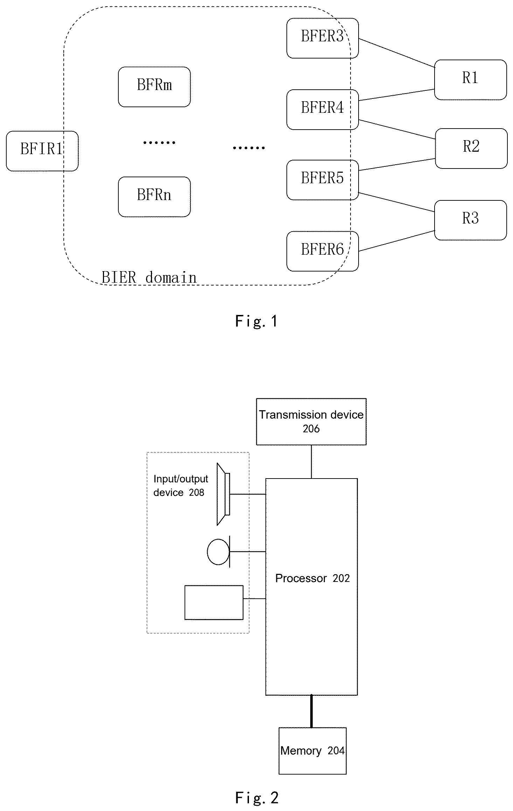

A downstream device or a receiver that needs to receive multicast traffic may be connected to more than one BFER device to improve the reliability of traffic reception. In this way, if one BFER malfunctions, the other BFER can forward the traffic. As shown in Fig. 1, the BIER network includes an ingress device BFIR1, devices BFER3/4/5/6 connected to receivers, and several forwarding devices BFRm to BFRn. The receiver R1 is connected to both BFER3 and BFER4 simultaneously, and can receive traffic from either BFER3 or BFER4; the receiver R2 is connected to both BFER4 and BFER5 simultaneously, and can receive traffic from either BFER4 or BFER5; and the receiver R3 is connected to both BFER5 and BFER6 simultaneously, and can receive traffic from either BFER5 or BFER6.

As shown in Fig. 1, since R1 can receive traffic from BFER3 or BFER4, if both devices forward traffic to R1 at the same time, R1 will receive duplicate traffic. The same traffic will reach BFER3 and BFER4 through different paths, thereby wasting bandwidth in the network. Therefore, under normal circumstances, only one of BFER3 and BFER4 will receive and forward multicast traffic to R1. Therefore, when the ingress device BFIR1 sends the multicast traffic required by R1, only the BFR-ID of one of BFER3 or BFER4 is selected and filled into the BitString of a BIER header. In this way, the multicast flow will only reach BFER3 or BFER4, and then will be forwarded to R1. Suppose that BFER3 is selected, there is no problem when BFER3 operates normally. However, if BFER3 suddenly malfunctions or a link connected to BFER3 malfunctions and the traffic is unable to reach BFER3, BFIR1 needs to select BFER4 as a destination of the traffic. However, it takes a long time for BFIR1 to learn about this change. During this period, traffic interruption will occur. In addition, all the traffic that has been sent by BFIR1 and is being forwarded in the network will be discarded or even cause loops since such traffic cannot reach BFER3. Therefore, the BIER Anycast function is needed to solve this problem.

A basic element of BIER Anycast is that BFER devices forming a dual-homing setup share the same BFR-ID. For example, BFER3 and BFER4 in Fig. 1 are mutually backup traffic forwarding devices for receiver R1, and both BFER3 and BFER4 can advertise the same BFR-ID value (referred to as Anycast BFR-ID). In this way, BFIR1 only needs to fill this Anycast BFR-ID value into the destination of the BIER header encapsulated for the multicast traffic required by R1. Intermediate devices select an optimal path, forward the traffic to BFER3 or BFER4, and then forward the traffic to R1. The difficulty in implementing this function lies in how to enable the intermediate devices to correctly establish a forwarding table for the Anycast BFR-ID and ensure that the traffic can be routed to one of the BFER devices.

In the existing solution, when an Anycast BFR-ID is advertised, a one-to-one corresponding BFR-Prefix (referred to as Anycast BFR-Prefix) is required. For a set of such protection relationships (e.g., BFER3 and BFER4 form a set of Anycast relationships), in addition to assigning a dedicated Anycast BFR-ID for this set, a dedicated Anycast BFR-Prefix also needs to be assigned at the same time. For this set of protection relationships formed by BFER4 and BFER5, in addition to assigning another dedicated Anycast BFR-ID, another dedicated Anycast BFR-Prefix needs to be assigned at the same time. The same applies to BFER5 and BFER6. Therefore, for these three sets of protection relationships, in addition to assigning three different Anycast BFR-IDs, three different Anycast BFR-Prefixes also need to be assigned. Anycast BFR-IDs must be assigned, but Anycast BFR-Prefixes are IP addresses that belong to general network resources and require overall network planning. In simple BIER Anycast scenarios where the number of required protection relationships is small, the number of IP address prefix resources occupied is small. However, in complex BIER Anycast scenarios (e.g., when there are hundreds of sets of protection relationships), hundreds of dedicated IP address prefixes need to be occupied, thereby greatly consuming network resources and posing a significant challenge to network planning. Therefore, the current solution relies too much on the allocation of IP address prefix resources and cannot be applied to large-scale network deployment. Moreover, the one-to-one relationship between prefixes and BFR-IDs needs to be strictly bound in the network, which greatly increases the deployment complexity.

In the related technology, when an Anycast BFR-ID is advertised, a one-to-one corresponding Anycast BFR-Prefix is required, which in turn requires consuming a large number of IP prefixes and leads to complex network deployment and high network resource consumption. No effective solution has been proposed to address this problem till now.

Therefore, it is necessary to improve the related technology to overcome the above defects in the related technology.

### Summary

The present invention provides a message advertisement method and apparatus, a storage medium, and an electronic device, so as to at least solve the problem that when an Anycast BFR-ID is advertised, a one-to-one corresponding Anycast BFR-Prefix is required, which in turn requires consuming a large number of IP prefixes and leads to complex network deployment and high network resource consumption.

According to one aspect of the present invention, a message advertisement method is provided, including: adding an Anycast BFR-ID corresponding to dual-homing BFER devices to a TLV field of a first advertisement protocol message, so as to obtain a second advertisement protocol message, wherein the dual-homing BFER devices include a first BFER device and a second BFER device; the dual-homing BFER devices are configured to forward multicast traffic to a same receiving device; and the advertisement protocol message includes a bit-forwarding router prefix (BFR-Prefix) of the first BFER device or the BFR-Prefix of the second BFER device; and advertising the second advertisement protocol message to other devices within a domain.

According to another aspect of the present invention, a message advertisement apparatus is further provided, including: an adding module configured to add an Anycast BFR-ID corresponding to dual-homing BFER devices to a TLV field of a first advertisement protocol message, so as to obtain a second advertisement protocol message, wherein the dual-homing BFER devices include a first BFER device and a second BFER device; the dual-homing BFER devices are configured to forward multicast traffic to a same receiving device; and the advertisement protocol message includes a bit-forwarding router prefix (BFR-Prefix) of the first BFER device or the BFR-Prefix of the second BFER device; and an advertisement module configured to advertise the second advertisement protocol message to other devices within a domain.

According to yet another aspect of the present invention, a computer-readable storage medium is further provided. A computer program is stored in the computer-readable storage medium, wherein the computer program is configured to execute the above message advertisement method when running.

According to still another aspect of the present invention, an electronic device is further provided, including a memory, a processor, and a computer program stored in the memory and executable on the processor. The above processor executes the above message advertisement method through the computer program.

Through the present invention, the Anycast BFR-ID corresponding to dual-homing BFER devices is added to a TLV field of a first advertisement protocol message, so as to obtain a second advertisement protocol message. The dual-homing BFER devices include a first BFER device and a second BFER device, and the dual-homing BFER devices are configured to forward multicast traffic to the same receiving device. The advertisement protocol message includes the bit-forwarding router prefix (BFR-Prefix) of the first BFER device or the BFR-Prefix of the second BFER device; and the second advertisement protocol message is advertised to other devices within a domain. That is to say, by adding the Anycast BFR-ID corresponding to the dual-homing BFER devices to the TLV field of the first advertisement protocol message (which includes the BFR-Prefix and corresponds to the dual-homing BFER devices), the second advertisement protocol message is obtained, and the second advertisement protocol message is advertised to other devices within a domain, thereby solving the technical problem in the related art that when an Anycast BFR-ID is advertised, a one-to-one corresponding Anycast BFR-Prefix is required, which in turn requires consuming a large number of IP prefixes and leads to complex network deployment and high network resource consumption, and achieving a technical effect of saving network resources.

### Brief Description of the Drawings

The drawings described herein are provided to further understand the present invention and constitute a part of the present invention. The exemplary embodiments of the present invention and their descriptions are used to explain the present invention, and do not constitute an improper limitation of the present invention. In the drawings:
Fig. 1 is a schematic diagram of a BIER Anycast scenario in the related art;
Fig. 2 is a block diagram of a hardware structure of a computer terminal for a message advertisement method of the present invention;
Fig. 3 is a flowchart (I) of a message advertisement method according to the present invention;
Fig. 4 is a schematic diagram (I) of Anycast BFR-ID advertisement of a message advertisement method according to the present invention;
Fig. 5 is a schematic diagram (II) of Anycast BFR-ID advertisement of a message advertisement method according to the present invention;
Fig. 6 is a schematic diagram of an Anycast BFR-ID advertisement format of a message advertisement method according to the present invention;
Fig. 7 is a schematic diagram (I) of a forwarding table for all Anycast BFR-IDs of a message advertisement method according to the present invention;
Fig. 8 is a flowchart (II) of a message advertisement method according to the present invention;
Fig. 9 is a schematic diagram of information storage such as next hops of a message advertisement method according to the present invention;
Fig. 10 is a flowchart (III) of a message advertisement method according to the present invention;
Fig. 11 is a schematic diagram (II) of a forwarding table for all Anycast BFR-IDs of a message advertisement method according to the present invention;
Fig. 12 is a structural block diagram of a message advertisement apparatus according to the present invention.

### Detailed Description of the Embodiments

To enable those skilled in the art to better understand the solutions of the present invention, the technical solutions in the present invention will be clearly and completely described below in conjunction with the drawings in the present invention. Obviously, the described embodiments are merely a part but not all of the embodiments of the present invention. Based on the embodiments in the present invention, all the other embodiments obtained by those skilled in the art without any creative effort shall fall within the protection scope of the present invention.

It should be noted that the terms "first" and "second" in the specification, claims, and the above drawings of the present invention are used to distinguish similar objects, and are not necessarily used to describe a specific sequence or order. It should be understood that the data used in this way can be interchanged under appropriate circumstances, such that the embodiments of the present invention described herein can be implemented in an order other than those illustrated or described herein. In addition, the terms "include" and "have" and any variations thereof are intended to cover non-exclusive inclusion. For example, a process, method, system, product, or device that includes a series of steps or units is not necessarily limited to the clearly listed steps or units, but may include other steps or units that are not clearly listed or are inherent to such processes, methods, products, or devices.

The method embodiments provided in the present invention can be executed in a computer terminal or a similar computing device. Taking execution on a computer terminal as an example, Fig. 2 is a block diagram of a hardware structure of a computer terminal for a message advertisement method of the present invention. As shown in Fig. 2, the computer terminal may include one or more (only one is shown in Fig. 2) processors 202 (the processor 202 may include, but is not limited to, a microprocessor unit (MPU) or a programmable logic device (PLD)) and a memory 204 configured to save data. In an exemplary embodiment, the above computer terminal may further include a transmission device 206 for communication functions and an input/output device 208. Those skilled in the art can understand that the structure shown in Fig. 2 is only schematic and does not limit the structure of the above computer terminal. For example, the computer terminal may further include more or fewer components than those shown in Fig. 2, or have a different configuration that has the same functions as those shown in Fig. 2 or has more functions than those shown in Fig. 2.

The memory 204 can be configured to store computer programs, such as software programs and modules of application software, for example, the computer program corresponding to the message advertisement method in the present invention. The processor 202 executes various functional applications and data processing by running the computer program stored in the memory 204, that is, implementing the above method. The memory 204 may include a high-speed random-access memory, and may also include a non-volatile memory, such as one or more magnetic storage devices, flash memories, or other non-volatile solid-state memories. In some examples, the memory 204 may further include memories remotely arranged relative to the processor 202, and these remote memories may be connected to a computer terminal through a network. Examples of the above network include, but are not limited to, the Internet, an intranet, a local area network (LAN), a mobile communication network, and combinations thereof.

The transmission device 206 is configured to receive or send data via a network. Specific examples of the above network may include a wireless network provided by a communication provider of a computer terminal. In one example, the transmission device 206 includes a network interface controller (NIC), and the network interface controller can be connected to other network devices through a base station, so as to communicate with the Internet. In one example, the transmission device 206 may be a radio frequency (RF) module, and the radio frequency module is configured to communicate with the Internet in a wireless manner.

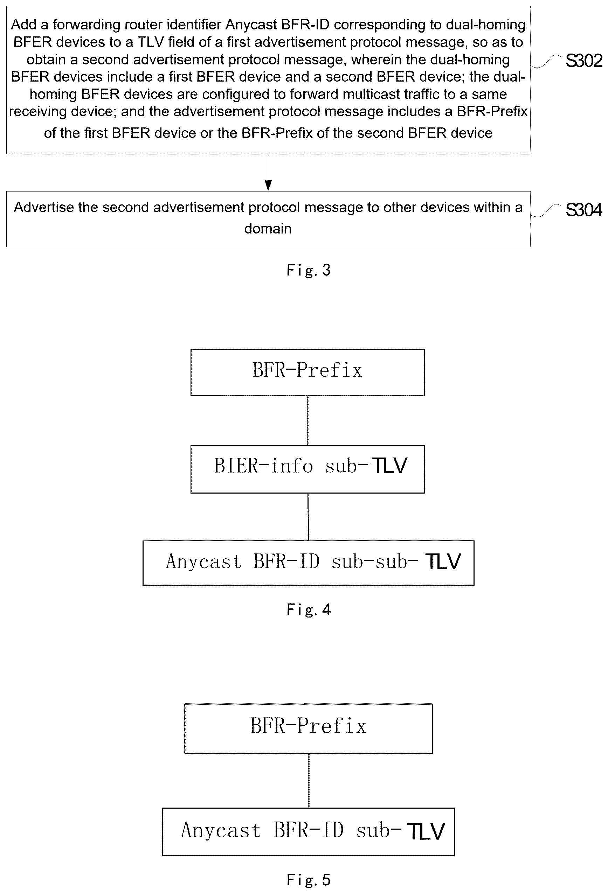

Fig. 3 is a flowchart (I) of a message advertisement method according to the present invention applied to the above computer terminal. As shown in Fig. 3, the method includes the following steps:
Step S302: adding an Anycast BFR-ID corresponding to dual-homing BFER devices to a TLV field of a first advertisement protocol message, so as to obtain a second advertisement protocol message, wherein the dual-homing BFER devices include a first BFER device and a second BFER device; the dual-homing BFER devices are configured to forward multicast traffic to a same receiving device; and the advertisement protocol message includes a bit-forwarding router prefix (BFR-Prefix) of the first BFER device or the BFR-Prefix of the second BFER device.

It should be noted that the dual-homing BFER devices include the first BFER device and the second BFER device. Both the first BFER device and the second BFER device have their own BFR-Prefixes, and both the first BFER device and the second BFER device have corresponding first advertisement protocol messages. The first advertisement protocol message corresponding to the same BFER device carries the BFR-Prefix of the same BFER device itself. For example, as shown in Fig. 1, BFER3 and BFER3 in Fig. 1 are connected to the same receiving device R1, so BFER3 and BFER3 form dual-homing BFER devices. Then, BFER3 corresponds to the first advertisement protocol message of the BFER3 device, and the first advertisement protocol message of the BFER3 device carries the BFR-Prefix of the BFER3 device; BFER4 corresponds to the first advertisement protocol message of the BFER4 device, and the first advertisement protocol message of the BFER4 device carries the BFR-Prefix of the BFER4 device.

Step S304: advertising the second advertisement protocol message to other devices within a domain.

In the present invention, the Anycast BFR-ID corresponding to dual-homing BFER devices is added to a TLV field of a first advertisement protocol message, so as to obtain a second advertisement protocol message. The dual-homing BFER devices include a first BFER device and a second BFER device, and the dual-homing BFER devices are configured to forward multicast traffic to the same receiving device. The advertisement protocol message includes the bit-forwarding router prefix (BFR-Prefix) of the first BFER device or the BFR-Prefix of the second BFER device; and the second advertisement protocol message is advertised to other devices within a domain. That is to say, by adding the Anycast BFR-ID corresponding to the dual-homing BFER devices to the TLV field of the first advertisement protocol message (which includes the BFR-Prefix and corresponds to the dual-homing BFER devices), the second advertisement protocol message is obtained, and the second advertisement protocol message is advertised to other devices within a domain, thereby solving the technical problem in the related art that when an Anycast BFR-ID is advertised, a one-to-one corresponding Anycast BFR-Prefix is required, which in turn requires consuming a large number of IP prefixes and leads to complex network deployment and high network resource consumption, and achieving a technical effect of saving network resources.

For the above step S302, the adding the Anycast BFR-ID corresponding to the dual-homing BFER devices to the TLV field of the first advertisement protocol message includes the following implementation solutions: adding the Anycast BFR-ID to a sub-sub-TLV field of the first advertisement protocol message when the BFR-ID of the dual-homing BFER devices themselves is present in the first advertisement protocol message, as shown in Fig. 4; and adding the Anycast BFR-ID to a sub-TLV field of the first advertisement protocol message when a BFR-ID of the dual-homing BFER devices themselves is not present in the first advertisement protocol message, as shown in Fig. 5.

That is, it is determined whether the first advertisement protocol message corresponding to the dual-homing BFER devices carries the BFR-ID assigned by the dual-homing BFER devices to themselves. Based on the presence or absence of the self-assigned BFR-ID, it is determined to add the Anycast BFR-ID to the sub-sub-TLV field or the sub-TLV field of the first advertisement protocol message. Specifically, when the dual-homing BFER device advertises its BFR-Prefix, if it has an assigned BFR-ID (which only identifies the BFER itself, not the Anycast BFR-ID), the BFR-ID will be present in the BIER-Info sub-TLV of the first advertisement protocol message. Further, when the BFR-ID is present in the first advertisement protocol message, the Anycast BFR-ID corresponding to the dual-homing BFER devices is added to the sub-sub-TLV field of the first advertisement protocol message; and when the BFR-ID is not present in the first advertisement protocol message, the Anycast BFR-ID corresponding to the dual-homing BFER devices is added to the sub-TLV field of the first advertisement protocol message.

It should be noted that the dual-homing BFER devices correspond to the first advertisement protocol message. The dual-homing BFER devices include a first BFER device and a second BFER device. The first BFER device and/or the second BFER device may also be included in other dual-homing BFER devices. Further, the first BFER device may correspond to a plurality of Anycast BFR-IDs, and the second BFER device may also correspond to a plurality of Anycast BFR-IDs. When the TLV field is added to the first advertisement protocol message, all the Anycast BFR-IDs corresponding to the same BFER device (the first BFER device or the second BFER device) need to be added to the TLV field of the first advertisement protocol message, as shown in Fig. 5. Generally, the Length value of the advertised Anycast sub-sub-TLV is a fixed value, preferably 2 bytes. Further, if the same BFER device corresponds to two Anycast BFR-IDs (that is, included in two sets of dual-homing BFER devices), the second advertisement protocol message obtained by the same BFER device will carry two Anycast BFR-IDs of 4 bytes, and so on.

In an exemplary embodiment, after the second advertisement protocol message is advertised to other devices within a domain, the method further includes: determining the plurality of BFR-Prefixes corresponding to the Anycast BFR-ID; determining path costs to the plurality of BFR-Prefixes to obtain a plurality of path costs; and determining a target cost from the plurality of path costs according to a preset rule, and taking a next-hop device in a path corresponding to the target cost as the next-hop device for reaching the Anycast BFR-ID in a forwarding table.

It is understandable that dual-homing BFER devices correspond to an Anycast BFR-ID, and the dual-homing devices include a plurality of BFER devices. Therefore, one Anycast BFR-ID corresponds to a plurality of BFR-Prefixes. The path costs to the plurality of BFR-Prefixes are determined, and the next-hop device in the path corresponding to the target cost specified by the preset rule among the plurality of path costs is set as a next-hop device of the current device in the forwarding table of the current device.

For example, as shown in Fig.1, BFER3 and BFER4 form a set of Anycast protection relationships, and the value of the assigned Anycast BFR-ID is assumed to be 101; BFER4 and BFER5 form a set of Anycast protection relationships, and the value of the assigned Anycast BFR-ID is assumed to be 102; BFER5 and BFER6 as well as BFER4 and BFER5 form a set of Anycast protection relationships, and the value of the assigned Anycast BFR-ID is assumed to be 103. If multicast traffic needs to be forwarded to the receiving device R1, the Anycast BFR-ID corresponding to R1 is determined, and the value of Anycast BFR-ID is 101, and then the plurality of BFR-Prefixes corresponding to Anycast BFR-ID 101 are determined. As can be seen from Fig. 1, the plurality of BFR-Prefixes include the BFR-Prefix of BFER3 and the BFR-Prefix of BFER4. The plurality of path costs from the current device (i.e., other devices within a domain) that receives the second advertisement protocol message to the BFR-Prefix of BFER3 and the BFR-Prefix of BFER4 are calculated. The path cost determined according to a preset rule is selected as a target cost, and the next-hop device corresponding to the target cost is used as the next-hop device for the current device to forward multicast traffic to the receiving device R1. The next-hop device (e.g., a port number of the device) is then written into the forwarding table of the current device.

In an exemplary embodiment, after advertising the second advertisement protocol message to other devices within a domain, the method further includes: determining all BFR-Prefixes carried in the received second advertisement protocol messages; determining the path costs to all the BFR-Prefixes to obtain all the path costs; determining a plurality of path costs corresponding to the Anycast BFR-ID from all the path costs; and determining a target cost from the plurality of path costs according to a preset rule, and taking the next-hop device in the path corresponding to the target cost as the next-hop device for reaching the Anycast BFR-ID in the forwarding table.

Another solution for determining the next-hop device in the forwarding table is as follows: when any device among the other devices within a domain (equivalent to the current device in the above embodiment) receives the second advertisement protocol message, all path costs between any device and the BFER devices that the device can reach are directly calculated, and are stored in a storage space of any device. Subsequently, the BFR-Prefixes of the plurality of BFERs corresponding to each Anycast BFR-ID are determined, and the path costs of the BFR-Prefixes of the plurality of BFERs are determined from all the path costs recorded in the storage space, and the target cost is further determined.

In an exemplary embodiment, after determining path costs to the plurality of BFR-Prefixes to obtain the plurality of path costs, the method further includes: storing the plurality of path costs in a storage space of the other devices.

It is understandable that after calculating the path costs, other devices within a domain can store the path costs in their own storage spaces. This avoids the need to recalculate the path costs in scenarios where recalculation of the forwarding table is required, such as when there are duplicate BFER BFR-Prefixes corresponding to other Anycast BFR-IDs or when a network fault occurs, since such recalculations would waste network resources. In turn, when path costs are needed, the path cost information can be directly read from the storage space of the device.

In an exemplary embodiment, the determining a target cost from the plurality of path costs according to a preset rule includes one of the following steps: determining a minimum path cost among the plurality of path costs, and determining the minimum path cost as the target cost; determining a plurality of identical path costs among the plurality of path costs, and determining the plurality of identical path costs as the target cost; determining the minimum path cost among the plurality of path costs, and determining a sub-optimal path cost among the plurality of path costs; and determining the minimum path cost and the sub-optimal path cost as the target cost.

Different preset rules for calculating the target cost result in different final target costs. The preset rule can be any of the following: selecting the minimum path cost; selecting both the minimum path cost and the sub-optimal path cost, such that when a failure occurs to a forwarding network of the multicast traffic indicated by the minimum path cost, the multicast traffic can be forwarded by directly using the next-hop path corresponding to the sub-optimal path cost, thereby ensuring smooth forwarding of multicast traffic; selecting a plurality of identical path costs to implement a load balancing function and avoid the loss of some multicast traffic caused by insufficient load-bearing capacity of a single BFER device.

In an exemplary embodiment, after advertising the second advertisement protocol message to other devices within a domain, the method further includes: determining a plurality of reachable BFR-Prefixes corresponding to the Anycast BFR-ID when a failure occurs in an intra-domain network; determining the minimum path cost among the path costs corresponding to the plurality of reachable BFR-Prefixes; and updating the next-hop device corresponding to the minimum path cost recorded in the forwarding table to the next-hop device corresponding to the minimum path cost among the path costs.

When a failure occurs in the intra-domain network, devices within a domain need to recalculate their forwarding tables. Specifically, when the preset rule is to determine the minimum path cost, the BFR-Prefix of the path (typically the path indicated by the previously calculated minimum path cost) which has encountered a failure is determined. A plurality of reachable BFR-Prefixes corresponding to the Anycast BFR-ID (excluding the BFR-Prefix of the path which has encountered a failure) are determined, and the minimum path costs to the plurality of reachable BFR-Prefixes are re-determined.

In an exemplary embodiment, after advertising the second advertisement protocol message to other devices within a domain, the method further includes: forwarding the multicast traffic through the next-hop device corresponding to the sub-optimal path cost recorded in the forwarding table when a failure occurs in the intra-domain network.

Based on the foregoing embodiment, when the preset rule is to determine both the minimum path cost and the sub-optimal path cost, if no failure occurs in the intra-domain network, multicast traffic is typically forwarded only through a next-hop path indicated by the minimum path cost, and the next-hop device indicated by the sub-optimal path cost is taken as a backup forwarding device; however, once a failure occurs in an intra-domain network, the next-hop device indicated by the sub-optimal path cost is activated for forwarding multicast traffic. The backup forwarding solution provided in the present invention enables rapid switching of forwarding devices when a failure occurs in the intra-domain network, thereby avoiding resource and time waste caused by recalculating the next-hop device and further ensuring smooth forwarding of multicast traffic.

In an exemplary embodiment, after determining a target cost from the plurality of path costs according to a preset rule and taking the device corresponding to the target cost as the next-hop device for reaching the Anycast BFR-ID in the forwarding table, the method further includes: distributing and forwarding the multicast traffic through the plurality of next-hop devices which are in one-to-one correspondence with the plurality of identical paths recorded in the forwarding table.

Based on the foregoing embodiment, when the preset rule is to determine a plurality of identical path costs, the plurality of next-hop devices indicated by the plurality of identical path costs are all recorded in the forwarding table. During multicast traffic forwarding, traffic is distributed and forwarded through the plurality of next-hop devices, so as to prevent packet loss caused by insufficient load-bearing capacity of a single device.

The message advertisement method is further described below with reference to the following embodiments.

The present invention provides a solution that implements a BIER Anycast function without relying on IP address resource allocation. One-to-one binding between BFR-Prefixes and Anycast BFR-IDs is not required, making it applicable to large-scale network deployment and significantly simplifying deployment complexity.

Specifically, the implementing the BIER Anycast function without relying on IP address resource allocation includes the following contents:
when the Anycast BFR-ID that represents a protection relationship is advertised, the Anycast BFR-ID is advertised as a newly added type directly along with the BFR-Prefix of the BFER. If a plurality of Anycast BFR-IDs need to be advertised at a single node, all of the Anycast BFR-IDs are advertised along with the BFR-Prefix, eliminating the need to allocate and advertise dedicated Anycast BFR-Prefixes.

The Anycast BFR-ID is advertised as a new sub-TLV type along with the BFR-Prefix of the device itself; or is advertised as a newly added sub-sub-TLV type along with the BIER-Info sub-TLV. TLV (Type-Length-Value) is a universal data structure format.

When devices in the network calculate a BIER forwarding table, for an Anycast BFR-ID, the devices need to find the BFR-Prefixes corresponding to the plurality of devices where the Anycast BFR-ID may exist, calculate the path costs to these BFR-Prefixes, select the BFR-Prefix with the minimum path cost, and take the next-hop device corresponding to the BFR-Prefix with the minimum path cost as the next hop for reaching the Anycast BFR-ID in the BIER forwarding table.

Further, the calculation process can also be optimized by storing the calculated path costs of the BFR-Prefixes, so as to reduce repeated calculation processes for subsequent lookups.

When a failure occurs to a network, another optimal path to the Anycast BFR-ID is directly calculated and is delivered to the forwarding table, so as to realize rapid switching.

Further, the next hop with the sub-optimal path cost can also be selected and delivered to the BIER forwarding table. When a failure occurs to the optimal path, the next hop of the sub-optimal path can be directly used for traffic forwarding, thereby implementing the fast reroute (FRR) function that enables rapid switching and rapid recovery.

Further, when a plurality of paths have identical costs, the next hops of the plurality of paths can also be delivered to the BIER forwarding table. During traffic forwarding, the traffic is directly distributed across a plurality of paths, thereby implementing the equal-cost multi-path (ECMP) function for load balancing.

Based on the above content, the implementing the BIER Anycast function without relying on IP address resource allocation also includes a device processing part and a signaling advertisement part.

### 1) Device Processing Part

When a device calculates the BIER forwarding table, for an Anycast BFR-ID, the device searches for the BFR-Prefixes advertised by all the corresponding devices, calculates the path costs to these BFR-Prefixes, selects the path with the minimum cost, takes the next hop corresponding to this path as the next hop corresponding to the Anycast BFR-ID, and fills the next hop into the BIER forwarding table.

When a problem in the network triggers the calculation of the BIER forwarding table, a shortest path to the BFR-Prefix is selected from the device that advertises the Anycast BFR-ID, and the corresponding next hop is updated to the BIER forwarding table.

A further optimization method can be adopted, and the path costs to the BFR-Prefixes of all the devices are stored. In this way, when the next hop of an Anycast BFR-ID is calculated, there is no need to recalculate the paths of devices that advertise the Anycast BFR-ID; instead, the path with the minimum cost is directly selected, and its corresponding next hop is filled or updated into the BIER forwarding table.

Further, the next hop of the sub-optimal path can also be delivered to the BIER forwarding table together to implement the FRR (Fast Reroute) function.

Further, when a plurality of paths have identical costs, the next hops of these paths can be delivered to the BIER forwarding table together to implement an ECMP function.

### 2) Signaling Advertisement Part

When an Anycast BFR-ID is advertised, it is advertised as a newly added sub-TLV type directly along with the BFR-Prefix of the BFER. If a plurality of Anycast BFR-IDs need to be advertised at a single node, all of them are advertised along with the BFR-Prefix.

The Anycast BFR-ID is advertised as a new sub-TLV type along with the BFR-Prefix of the device itself; alternatively, the Anycast BFR-ID can also be advertised as a newly added sub-sub-TLV type along with the BIER-info sub-TLV.

The process of implementing the BIER Anycast function without relying on IP address resource allocation includes:
a device advertises the Anycast BFR-ID along with the BFR-Prefix of the device itself; and
after the Anycast BFR-ID advertised by other devices is received, route calculation is performed. For each Anycast BFR-ID, all the devices that advertise the Anycast BFR-ID are searched, the path costs to the BFR-Prefixes of these devices are calculated, the path with the minimum cost is selected, and the next hop corresponding to this path is filled into the entry of the Anycast BFR-ID in the BIER forwarding table.

When a problem occurs in the network and path recalculation is required, since the corresponding BFER is unreachable, the path with the minimum cost is selected from the path calculations of the BFR-Prefixes of other reachable devices, and the next hop corresponding to the path is updated to the entry of the Anycast BFR-ID in the BIER forwarding table.

A further optimization method is as follows: after a device calculates the BFR-Prefix paths to all devices for the first time, it stores corresponding costs. Therefore, when calculating the next hop of an Anycast BFR-ID and after searching for the corresponding advertising device, the path costs to their BFR-Prefixes can be directly compared. In this way, when a device advertises a plurality of Anycast BFR-IDs, its BFR-Prefix path is only calculated once, thereby greatly reducing calculation costs.

Further, during route calculation, the next hop of the sub-optimal path can also be delivered to the BIER forwarding table together to implement the FRR function.

Further, if a plurality of paths have identical costs during route calculation, the next hops of these paths can be delivered to the BIER forwarding table together to implement the ECMP function.

The above information advertisement implementation solution is explained and illustrated below in conjunction with optional embodiments, but it is not intended to limit the implementation manner of the present invention.

### Embodiment I

In the network shown in Fig. 1, BFER3/4/5/6 all need to advertise Anycast BFR-IDs to implement the BIER Anycast function. BFER3 forms only one set of Anycast protection relationships with BFER4, and the value of the assigned Anycast BFR-ID is assumed to be 101. For the protection relationships formed between BFER4 and BFER5, the value of the assigned Anycast BFR-ID is assumed to be 102. For the protection relationships formed between BFER5 and BFER6, the value of the assigned Anycast BFR-ID is assumed to be 103. When each BFER advertises its BFR-Prefix, if the BFER itself has an assigned BFR-ID (which only identifies the BFER itself, not the Anycast BFR-ID), it advertises the BIER-Info sub-TLV under the BFR-Prefix (used to carry its own BFR-ID). In this way, the Anycast BFR-ID can be advertised as a sub-sub-TLV along with the BIER-Info sub-TLV, as shown in Fig. 4. Other sub-sub-TLVs originally advertised along with the BIER-Info (such as the sub-sub-TLV for Multi Protocol Label Switching (MPLS) encapsulation) will be advertised in parallel with the sub-sub-TLV of the Anycast BFR-ID.

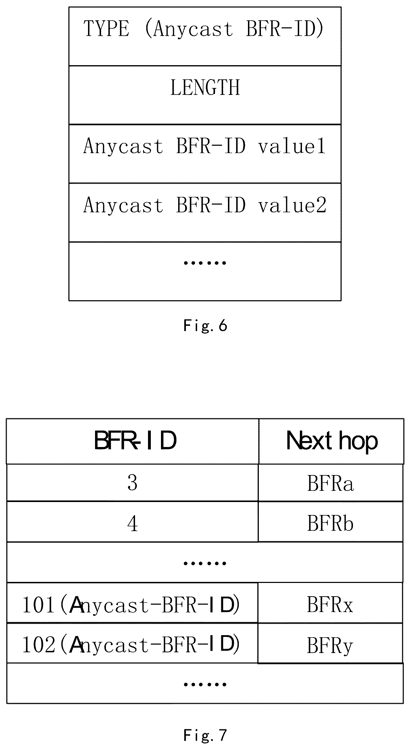

The format of the Anycast BFR-ID is in a TLV (Type, Length, Value) mode, as shown in Fig. 6. Its Type is a newly added type value for the Anycast BFR-ID, its Length is a total length of the actually carried Anycast BFR-ID value, a single BFR-ID has a length of 2 bytes, so the total length is an integer multiple of 2 bytes. For BFER3, the Length value of the advertised Anycast sub-sub-TLV is 2, carrying only one Anycast BFR-ID value (i.e., 101). Similarly, for BFER6, since only one Anycast BFR-ID is carried, the Length value of the advertised Anycast sub-sub-TLV is also 2, carrying only one Anycast BFR-ID value (i.e., 103). For BFER4 and BFER5, since both devices are responsible for two sets of protection relationships, so two Anycast BFR-ID values need to be advertised. The Length value of their advertised Anycast sub-sub-TLV is 4, carrying two Anycast BFR-ID values representing two sets of Anycast protection relationships. For example, the two Anycast BFR-ID values advertised by BFER4 are 101 and 102, and the two Anycast BFR-ID values advertised by BFER5 are 102 and 103.

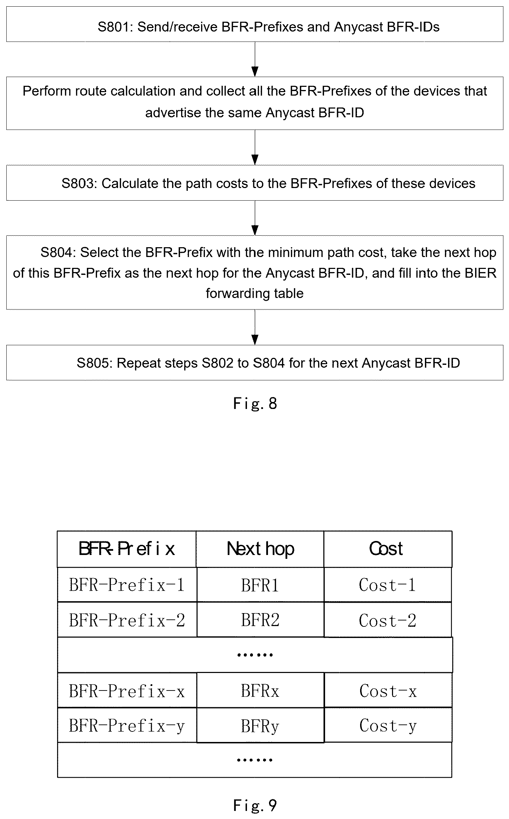

After devices in the network advertise to each other, each device can obtain the BFR-Prefixes advertised by other devices and the possibly carried Anycast BFR-ID information. Taking device BFRm as an example, it will receive the respective BFR-Prefixes of BFER3/4/5/6 and the carried Anycast BFR-ID sub-TLV or sub-sub-TLV. The device performs route calculation. When the Anycast BFR-ID (101) advertised by BFER3 is processed, the device will traverse the Anycast BFR-IDs advertised by other devices and find that BFER4 also advertises this Anycast BFR-ID (101). In this way, the two devices (BFER3 and BFER4) that advertise 101 are obtained, the path costs to the BFR-Prefixes of the two devices are respectively calculated, and the path with the minimum cost is selected. Assuming the calculation shows that the path to BFER3 has the minimum cost, this path is selected, if the next hop of this path is BFRx. then BFRm delivers an entry with the BFR-ID being 101 and the next hop being BFRx to the BIER forwarding table. When the Anycast BFR-ID 102 advertised by BFER4 is processed again, the same processing method will be adopted. It is found that device BFER5 also advertises this Anycast BFR-ID, the path costs to the BFR-Prefixes of BFER4 and BFER5 are calculated respectively, the path with the minimum cost is selected, and the next hop of this path (assumed to be BFRy) and Anycast BFR-ID 102 are delivered to the BIER forwarding table. The above process is repeated until the forwarding tables for all Anycast BFR-IDs are generated, as shown in Fig. 7. The overall process is described in Fig. 8, and includes the following steps:
Step S801: sending/receiving BFR-Prefixes and Anycast BFR-IDs;
Step S802: performing route calculation and collecting all BFR-Prefixes of the devices that advertise the same Anycast BFR-ID;
Step S803: calculating the path costs to the BFR-Prefixes of these devices;
Step S804: selecting the BFR-Prefix with the minimum path cost, taking the next hop of this BFR-Prefix as the next hop for the Anycast BFR-ID, and filling into the BIER forwarding table; and
Step S805: repeating steps S802 to S804 for the next Anycast BFR-ID.

Therefore, for the traffic to be received by R1, BFIR1 encapsulates the Anycast BFR-ID 101 into the BitString of a BIER header. An intermediate device forwards the traffic hop-by-hop to device BFER3 according to the BIER forwarding table, and BFER3 then forwards the traffic to R1. The same logic applies to the traffic to be received by R2/R3, which will not be repeated herein.

Further, during route calculation, since the same Anycast BFR-ID is determined to have a plurality of paths, in addition to selecting an optimal path, the next hop of the sub-optimal path can also be filled into the BIER forwarding table. Normally, traffic is only forwarded through the next hop of the optimal path; if a failure occurs to the optimal path, traffic can be directly forwarded through the second next hop in the table, so as to implement the FRR (Fast Reroute) function for rapid switching.

### Embodiment II

For some special cases, e.g., the BFER itself is not assigned its own BFR-ID, no BIER-Info sub-TLV is advertised, so the Anycast BFR-ID cannot be advertised along with the BIER-Info sub-TLV. In this case, the Anycast BFR-ID can be directly advertised as a sub-TLV along with the BFR-Prefix, as shown in Fig. 8. Of course, this method is also applicable to scenarios where the BIER-Info sub-TLV advertisement is omitted for various reasons. After the sub-TLV of Anycast BFR-ID, sub-sub-TLVs such as MPLS encapsulation are advertised in sequence.

The advertisement and calculation processes are the same as those described in Embodiment I.

### Embodiment III

The calculation process of the device can be further optimized.

Taking device BFRm as an example again, device BFRm will receive the respective BFR-Prefixes of BFER3/4/5/6 and the carried Anycast BFR-ID sub-TLVs or sub-sub-TLVs. The device performs route calculation, calculates the path costs to the BFR-Prefixes of all the devices, and stores the path costs, i.e., stores information such as the path costs to BFER3/4/5/6 and next hops, as shown in Fig. 9.

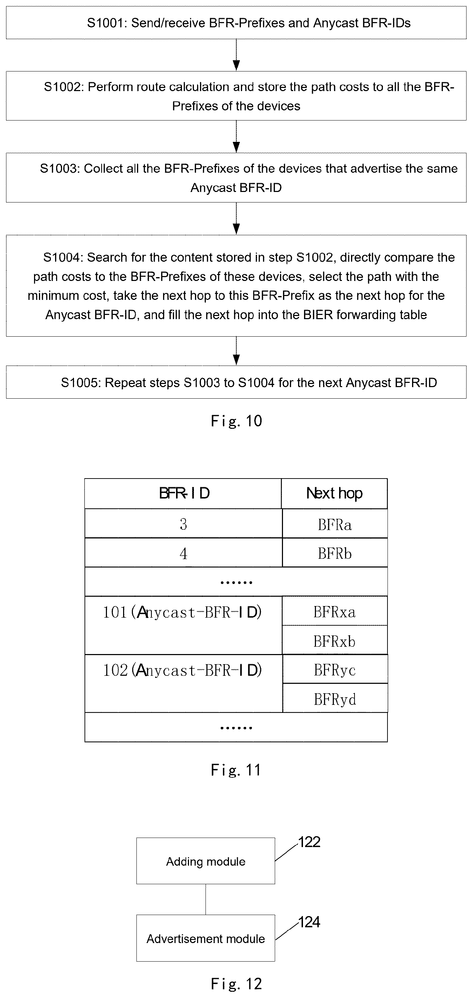

Then the received Anycast BFR-ID sub-TLVs or sub-sub-TLVs are processed. When the Anycast BFR-ID (101) advertised by BFER3 is processed, the device will traverse the Anycast BFR-IDs advertised by other devices and find that BFER4 also advertises this Anycast BFR-ID (101). In this way, the BFR-Prefixes of the two devices (BFER3 and BFER4) that advertise 101 are obtained, the stored information shown in Fig. 9 is directly searched, the path costs to these two BFR-Prefixes are compared, the next hop corresponding to the path with the minimum cost is selected, and the next hop is delivered to the BIER forwarding table together with the Anycast BFR-ID 101. The above process is repeated until the forwarding tables for all Anycast BFR-IDs are obtained. The overall process is described in Fig. 10, and includes the following steps:
Step S1001: sending/receiving BFR-Prefixes and Anycast BFR-IDs;
Step S1002: performing route calculation and storing the path costs to all the BFR-Prefixes of the devices.
Step S1003: collecting all the BFR-Prefixes of the devices that advertise the same Anycast BFR-ID;
Step S1004: searching for the content stored in step S1002, directly comparing the path costs to the BFR-Prefixes of these devices, selecting the path with the minimum cost, taking the next hop to this BFR-Prefix as the next hop for the Anycast BFR-ID, and filling the next hop into the BIER forwarding table; and
Step S1005: repeating steps S1003 to S1004 for the next Anycast BFR-ID.

### Embodiment IV

When a problem occurs in the network (e.g., a failure occurs to BFER3), there are two possible cases: in the first case, the BFR-Prefix advertised by BFER3 and the carried Anycast BFR-ID and other information are no longer valid. In the second case, the BFR-Prefix advertised by BFER3 and the carried information are still within a validity period, but there is no longer a path to BFER3.

For the first case, taking BFRm as an example again, the Anycast BFR-ID advertised by device BFER3 will not be obtained. Therefore, Anycast BFR-ID 101 will only be obtained from BFER4. Consequently, the next hop corresponding to the path to BFR-Prefix of BFER4 will be updated to the entry corresponding to BFR-ID 101 in the BIER forwarding table. All the devices in the network will process in this manner, so the traffic delivered to Anycast BFR-ID 101 will be forwarded to BFER4, and then forwarded to R1 by BFER4.

For the second case, taking BFRm as an example again, the Anycast BFR-ID advertised by device BFER3 will be obtained. For Anycast BFR-ID 101, both devices BFER3 and BFER4 will still be obtained. However, when the paths to the BFR-Prefixes of these two devices are calculated, it is found that BFER3 is unreachable, or no path to BFR-Prefix of BFER3 can be found when the BFR-Prefix storage table is searched. Therefore, only a valid path to BFER4 will be calculated, and the next hop corresponding to this path will be updated to the entry corresponding to BFR-ID 101 in the BIER forwarding table. All the devices in the network will process in this manner, so the traffic delivered to Anycast BFR-ID 101 will be forwarded to BFER4, and then forwarded to R1 by BFER4.

### Embodiment V

Based on the advertisement and calculation methods of the present invention, the Equal-Cost Multi-Path (ECMP) routing function can also be easily implemented.

In some scenarios, a receiver can receive traffic (but not duplicate traffic) from two BFER devices simultaneously. In this case, traffic can reach the two BFER devices via ECMP paths, and both BFER devices then forward the traffic to the receiver. This avoids concentration of traffic on a single BFER device, which would otherwise cause a bottleneck in the forwarding performance.

As shown in Fig. 1, assuming all the devices in the network select paths to BFER4, the traffic to be received by R1 and R2 both needs to be forwarded by BFER4, however, the capacity of BFER4 device is insufficient to forward such a large volume of traffic, which may lead to loss of part of the traffic. At this time, the ECMP function can be activated in the network, when a device performs calculations, if it is found that the path costs to the BFR-Prefixes of a plurality of devices that advertise the Anycast BFR-ID are identical, the next hops to the plurality of devices are written into the BIER forwarding table. During traffic forwarding, traffic is distributed across a plurality of paths, thereby reducing the forwarding load on a single BFER device. For example, assuming during route calculation, device BFRm finds that two devices (BFER3 and BFER4) both advertise Anycast BFR-ID 101, and it is found that the costs are identical when the paths to the BFR-Prefixes of these two devices are calculated. In this way, the next hops (assumed to be BFRxa and BFRxb) of the two paths to BFER3 and BFER4 are both filled into the BIER forwarding table, as shown in Fig. 11. During traffic forwarding, the traffic to R1 can be distributed across the paths to BFER3 and BFER4, and BFER3 and BFER4 then forward the traffic to R1, thereby reducing the processing load on a single BFER device.

In summary, after the advertisement and processing methods of the embodiments of the present invention are adopted, there is no need to allocate a one-to-one Anycast BFR-Prefix for each Anycast BFR-ID. All the devices only need to use their own BFR-Prefixes to represent themselves, thereby significantly reducing the consumption of IP address prefix resources, lowering planning difficulty, and being suitable for large-scale network deployment.

Further, the BIER Anycast scenario is a common application scenario for BIER technology and has broad deployment prospects. When the problems faced by BIER Anycast technology are solved, network IP prefix resources can also be significantly saved, which is an important concern for operators and has broad commercial prospects.

This embodiment also provides a message advertisement apparatus, and the apparatus is configured to implement the above embodiments and preferred implementations. Descriptions already provided are not repeated herein. As used below, the term "module" may refer to a combination of software and/or hardware that implements a predetermined function. Although the device described in the following embodiments is preferably implemented in software, implementation in hardware or a combination of software and hardware is also possible and contemplated.

Fig. 12 is a structural block diagram of a message advertisement apparatus according to the present invention. As shown in Fig. 12, the message advertisement apparatus includes:
an adding module 122 configured to add an Anycast BFR-ID corresponding to dual-homing BFER devices to a TLV field of a first advertisement protocol message, so as to obtain a second advertisement protocol message, wherein the dual-homing BFER devices include a first BFER device and a second BFER device; the dual-homing BFER devices are configured to forward multicast traffic to a same receiving device; and the advertisement protocol message includes a bit-forwarding router prefix (BFR-Prefix) of the first BFER device or the BFR-Prefix of the second BFER device; and
an advertisement module 124 configured to advertise the second advertisement protocol message to other devices within a domain.

In the present invention, through the above modules, the Anycast BFR-ID corresponding to the dual-homing BFER devices is added to the TLV field of the first advertisement protocol message, so as to obtain the second advertisement protocol message. The dual-homing BFER devices include a first BFER device and a second BFER device, and the dual-homing BFER devices are configured to forward multicast traffic to a same receiving device. The advertisement protocol message includes the bit-forwarding router prefix (BFR-Prefix) of the first BFER device or the BFR-Prefix of the second BFER device; and the second advertisement protocol message is advertised to other devices within a domain. That is to say, by adding the Anycast BFR-ID corresponding to the dual-homing BFER devices to the TLV field of the first advertisement protocol message (which includes the BFR-Prefix and corresponds to the dual-homing BFER devices), the second advertisement protocol message is obtained, and the second advertisement protocol message is advertised to other devices within a domain, thereby solving the technical problem in the related art that when an Anycast BFR-ID is advertised, a one-to-one corresponding Anycast BFR-Prefix is required, which in turn requires consuming a large number of IP prefixes and leads to complex network deployment and high network resource consumption, and achieving a technical effect of saving network resources.

In an exemplary embodiment, the adding module 122 is further configured to add the Anycast BFR-ID to a sub-sub-TLV field of the first advertisement protocol message when the BFR-ID of the dual-homing BFER devices themselves is present in the first advertisement protocol message, as shown in Fig. 4; and add the Anycast BFR-ID to the sub -TLV field of the first advertisement protocol message when a BFR-ID of the dual-homing BFER devices themselves is not present in the first advertisement protocol message, as shown in Fig. 5.

That is, it is determined whether the first advertisement protocol message corresponding to the dual-homing BFER device carries the BFR-ID assigned by the dual-homing BFER device to itself. Based on the presence or absence of this self-assigned BFR-ID, the Anycast BFR-ID is determined to be added to the sub-sub-TLV field or the sub-TLV field of the first advertisement protocol message. Specifically, when the dual-homing BFER device advertises its BFR-Prefix, if it has an assigned BFR-ID (which only identifies the BFER itself, not the Anycast BFR-ID), the BFR-ID will be present in the BIER-Info sub-TLV of the first advertisement protocol message. Further, when the BFR-ID is present in the first advertisement protocol message, the Anycast BFR-ID corresponding to the dual-homing BFER device is added to the sub-sub-TLV field of the first advertisement protocol message; when the BFR-ID is not present in the first advertisement protocol message, the Anycast BFR-ID corresponding to the dual-homing BFER device is added to the sub-TLV field of the first advertisement protocol message.

It should be noted that the dual-homing BFER devices correspond to the first advertisement protocol message. The dual-homing BFER devices include a first BFER device and a second BFER device. The first BFER device and/or the second BFER device may also be included in other dual-homing BFER devices. Therefore, the first BFER device may correspond to a plurality of Anycast BFR-IDs, and the second BFER device may also correspond to a plurality of Anycast BFR-IDs. When the TLV field is added to the first advertisement protocol message, all the Anycast BFR-IDs corresponding to the same BFER device (the first BFER device or the second BFER device) need to be added to the TLV field of the first advertisement protocol message, as shown in Fig. 5. Generally, the Length value of the advertised Anycast sub-sub-TLV is a fixed value, preferably 2 bytes. Further, if the same BFER device corresponds to two Anycast BFR-IDs (i.e., the same BFER device is included in two sets of dual-homing BFER devices), the second advertisement protocol message obtained by the same BFER device will carry two Anycast BFR-IDs of four bytes, and so on.

In an exemplary embodiment, the advertisement module 124 is further configured to: determine a plurality of the BFR-Prefixes corresponding to the Anycast BFR-ID; determine path costs to the plurality of BFR-Prefixes to obtain a plurality of path costs; and determine a target cost from the plurality of path costs according to a preset rule, and take a next-hop device in a path corresponding to the target cost as the next-hop device for reaching the Anycast BFR-ID in the forwarding table.

It is understandable that dual-homing BFER devices correspond to the same Anycast BFR-ID, and the dual-homing devices include a plurality of BFER devices. Therefore, the same Anycast BFR-ID corresponds to a plurality of BFR-Prefixes. The path costs to the plurality of BFR-Prefixes are determined, and the next-hop device in the path corresponding to the target cost indicated by the preset rule among the plurality of path costs is set as the next-hop device of the current device in the forwarding table of the current device.

For example, as shown in Fig. 1, BFER3 and BFER4 form a set of Anycast protection relationships, and the value of the assigned Anycast BFR-ID is assumed to be 101; BFER4 and BFER5 form a set of Anycast protection relationships, and the value of the assigned Anycast BFR-ID is assumed to be 102; BFER5 and BFER6 as well as BFER4 and BFER5 form a set of Anycast protection relationships, and the value of the assigned Anycast BFR-ID is assumed to be 103. If multicast traffic needs to be forwarded to the receiving device R1, the Anycast BFR-ID corresponding to R1 is determined, and the value of Anycast BFR-ID is 101, and then the plurality of BFR-Prefixes corresponding to Anycast BFR-ID 101 are determined. As can be seen from Fig. 1, the plurality of BFR-Prefixes include the BFR-Prefix of BFER3 and the BFR-Prefix of BFER4. The plurality of path costs from the current device (i.e., other devices within the domain) that receives the second advertisement protocol message to the BFR-Prefixes of BFER3 and BFER4 are calculated. The path cost determined according to the preset rule is selected as a target cost, and the next-hop device corresponding to the target cost is taken as the next-hop device for the current device to forward multicast traffic to the receiving device R1. The next-hop device (e.g., a port number of the device) is then written into the forwarding table of the current device.

In an exemplary embodiment, the advertisement module 124 is further configured to: determine all BFR-Prefixes carried in the received second advertisement protocol messages; determine the path costs to all the BFR-Prefixes to obtain all the path costs; determine a plurality of path costs corresponding to the Anycast BFR-ID from all the path costs; and determine a target cost from the plurality of path costs according to a preset rule, and take the next-hop device in the path corresponding to the target cost as the next-hop device for reaching the Anycast BFR-ID in the forwarding table.

Another solution for determining the next-hop device in the forwarding table is as follows: when any device among the other devices within a domain (equivalent to the current device in the above embodiment) receives the second advertisement protocol message, it can directly calculate all the path costs between the device itself and the BFER devices that the device can reach, and store the path costs in a storage space of the device. Subsequently, the device determines the BFR-Prefixes of the plurality of BFERs corresponding to each Anycast BFR-ID, determines the path costs of the plurality of BFR-Prefixes from all the path costs recorded in the storage space, and further determines a target cost.

In an exemplary embodiment, the above apparatus further includes a storage module configured to store the plurality of path costs in the storage space of the other devices.

It is understandable that after calculating the path costs, other devices within a domain can store the path costs in their own storage spaces. This avoids the need to recalculate the path costs in scenarios where recalculation of the forwarding table is required, such as when there are duplicate BFER BFR-Prefixes corresponding to other Anycast BFR-IDs or when a network fault occurs, since such recalculations would waste network resources. In turn, when path costs are needed, the path cost information can be directly read from the storage space of the device.

In an exemplary embodiment, the advertisement module 124 is further configured to: determine a minimum path cost among the plurality of path costs, and determine the minimum path cost as the target cost; determine a plurality of identical path costs among the plurality of path costs, and determine the plurality of identical path costs as the target cost; and determine the minimum path cost among the plurality of path costs, determine a sub-optimal path cost among the plurality of path costs, and determine the minimum path cost and the sub-optimal path cost as the target cost.

Different preset rules for calculating the target cost result in different final target costs. The preset rule can be any of the following: selecting the minimum path cost; selecting both the minimum path cost and the sub-optimal path cost, such that when a failure occurs to a forwarding network of the multicast traffic indicated by the minimum path cost, the multicast traffic can be forwarded by directly using the next-hop path corresponding to the sub-optimal path cost, thereby ensuring smooth forwarding of multicast traffic; selecting a plurality of identical path costs to implement a load balancing function and avoid the loss of some multicast traffic caused by insufficient load-bearing capacity of a single BFER device.

In an exemplary embodiment, the advertisement module 124 is further configured to: determine a plurality of reachable BFR-Prefixes corresponding to the Anycast BFR-ID when a failure occurs in an intra-domain network; determine the minimum path cost among the path costs corresponding to the plurality of reachable BFR-Prefixes; and update the next-hop device corresponding to the minimum path cost recorded in the forwarding table to the next-hop device corresponding to the minimum path cost among the path costs.

When a failure occurs in an intra-domain network, devices within a domain need to recalculate their forwarding tables. Specifically, when the preset rule is to determine the minimum path cost, the BFR-Prefix of the failed path (typically the path indicated by the previously calculated minimum path cost) is determined. A plurality of reachable BFR-Prefixes corresponding to the Anycast BFR-ID (excluding the BFR-Prefix of the failed path) are determined, and the minimum path cost to the plurality of reachable BFR-Prefixes is re-determined.

In an exemplary embodiment, the advertisement module 124 is further configured to forward the multicast traffic through the next-hop device corresponding to the sub-optimal path cost recorded in the forwarding table when a failure occurs in an intra-domain network.

Based on the foregoing embodiment, when the preset rule is to determine both the minimum path cost and the sub-optimal path cost and if no failure occurs in the intra-domain network, multicast traffic is typically forwarded only through the next-hop path indicated by the minimum path cost, while the next-hop device indicated by the sub-optimal path cost is taken as a backup forwarding device; however, once a failure occurs in an intra-domain network, the next-hop device indicated by the sub-optimal path cost is activated for multicast traffic forwarding. The backup forwarding solution provided in the present invention enables rapid switching of forwarding devices when a failure occurs in an intra-domain network, thereby avoiding waste of resource and time caused by recalculating the next-hop device and further ensuring smooth forwarding of multicast traffic.

In an exemplary embodiment, the advertisement module 124 is further configured to distribute and forward the multicast traffic through the plurality of next-hop devices corresponding to the plurality of identical paths recorded in the forwarding table.

Based on the foregoing embodiment, when the preset rule is to determine a plurality of identical path costs, the plurality of next-hop devices indicated by the plurality of identical path costs are all recorded in the forwarding table. During multicast traffic forwarding, the traffic is distributed and forwarded through the plurality of next-hop devices, thereby preventing packet loss caused by insufficient load-bearing capacity of a single device.

Through the description of the above implementation manners, those skilled in the art can clearly understand that the method according to the above embodiments can be implemented by means of software plus a necessary general hardware platform. Of course, it can also be implemented by hardware, but in many cases, the former is a better implementation manner. Based on this understanding, the technical solution of the present invention essentially, or the part that contributes to the prior art, can be embodied in the form of a software product. The computer software product is stored in a readable storage medium (such as ROM/RAM, magnetic disk, optical disk) and includes several instructions for enabling a terminal device (which may be a mobile phone, a computer, a server, or a network device, etc.) to execute the method according to each embodiment of the present invention.

In an exemplary embodiment, the above computer-readable storage medium may include, but is not limited to: a USB flash drive, a read-only memory (ROM), a random-access memory (RAM), a mobile hard disk, a magnetic disk, or an optical disk, and other media that can store computer programs.

For specific examples in this embodiment, please refer to the examples described in the above embodiments and exemplary implementations, which will not be repeated in this embodiment.

An embodiment of the present invention further provides an electronic device, including a memory and a processor. A computer program is stored in the memory, and the processor is configured to run the computer program to execute the steps in any of the above method embodiments.

Optionally, in this embodiment, the above processor may be configured to execute the following steps via the computer program:
S1: adding an Anycast BFR-ID corresponding to dual-homing BFER devices to a TLV field of a first advertisement protocol message, so as to obtain a second advertisement protocol message, wherein the dual-homing BFER devices include a first BFER device and a second BFER device; the dual-homing BFER devices are configured to forward multicast traffic to a same receiving device; and the advertisement protocol message includes a bit-forwarding router prefix (BFR-Prefix) of the first BFER device or the BFR-Prefix of the second BFER device; and
S2: advertising the second advertisement protocol message to other devices within a domain.

In an exemplary embodiment, the above electronic device may further include a transmission device and an input/output device, where the transmission device is connected to the above processor, and the input/output device is connected to the above processor.

Optionally, in this embodiment, the above electronic device may be further configured to execute the above steps via the computer program: S1: adding an Anycast BFR-ID corresponding to dual-homing BFER devices to a TLV field of a first advertisement protocol message, so as to obtain a second advertisement protocol message, wherein the dual-homing BFER devices include a first BFER device and a second BFER device; the dual-homing BFER devices are configured to forward multicast traffic to a same receiving device; and the advertisement protocol message includes a bit-forwarding router prefix (BFR-Prefix) of the first BFER device or the BFR-Prefix of the second BFER device; and S2: advertising the second advertisement protocol message to other devices within a domain.

In an exemplary embodiment, the above electronic device may further include a transmission device and an input/output device, wherein the transmission device is connected to the above processor, and the input/output device is connected to the above processor.

For specific examples in this embodiment, please refer to the examples described in the above embodiments and exemplary implementations, which will not be repeated in this embodiment.

Obviously, those skilled in the art should understand that the modules or steps of the present invention described above can be implemented by general-purpose computing devices. They can be concentrated on a single computing device, or distributed across a network composed of a plurality of computing devices. They can be implemented using program code executable by computing devices. Therefore, they can be stored in a storage device for execution by a computing device. In some cases, the steps shown or described can be executed in an order different from that described herein, or they can be fabricated into individual integrated circuit modules respectively, or a plurality of these modules or steps can be fabricated into a single integrated circuit module for implementation. In this way, the present invention is not limited to any specific combination of hardware and software.

The above descriptions are merely preferred embodiments of the present invention and are not intended to limit the present invention. For those skilled in the art, various modifications and variations can be made to the present invention. Any modification, equivalent replacement, improvement and the like made within the principles of the present invention shall be included in the protection scope of the present invention.

## Claims

1. A message advertisement method, comprising:
adding a forwarding router identifier Anycast BFR-ID corresponding to dual-homing bit-forwarding egress router, BFER, devices to a TLV field of a first advertisement protocol message, so as to obtain a second advertisement protocol message, wherein the dual-homing BFER devices comprise a first BFER device and a second BFER device; the dual-homing BFER devices are configured to forward multicast traffic to a same receiving device; and the advertisement protocol message comprises a bit-forwarding router prefix, BFR-Prefix, of the first BFER device or the BFR-Prefix of the second BFER device; and
advertising the second advertisement protocol message to other devices within a domain.

2. The message advertisement method according to claim 1, wherein the adding a forwarding router identifier Anycast BFR-ID corresponding to dual-homing bit-forwarding egress router, BFER, devices to a TLV field of a first advertisement protocol message comprises:
adding the Anycast BFR-ID to a sub-TLV field of the first advertisement protocol message when a BFR-ID of the dual-homing BFER devices themselves is not present in the first advertisement protocol message; and
adding the Anycast BFR-ID to a sub-sub-TLV field of the first advertisement protocol message when the BFR-ID of the dual-homing BFER devices themselves is present in the first advertisement protocol message.

3. The message advertisement method according to claim 1, wherein after advertising the second advertisement protocol message to other devices within a domain, the method further comprises:
determining a plurality of the BFR-Prefixes corresponding to the Anycast BFR-ID;
determining path costs to the plurality of BFR-Prefixes to obtain a plurality of path costs; and
determining a target cost from the plurality of path costs according to a preset rule, and taking a next-hop device in a path corresponding to the target cost as a next-hop device for reaching the Anycast BFR-ID in a forwarding table.

4. The message advertisement method according to claim 1, wherein after advertising the second advertisement protocol message to other devices within a domain, the method further comprises:
determining all BFR-Prefixes carried in the received second advertisement protocol messages;
determining the path costs to all the BFR-Prefixes to obtain all the path costs;
determining a plurality of path costs corresponding to the Anycast BFR-ID from all the path costs; and
determining a target cost from the plurality of path costs according to a preset rule, and taking the next-hop device in a path corresponding to the target cost as the next-hop device for reaching the Anycast BFR-ID in the forwarding table.

5. The message advertisement method according to claim 3, wherein after determining path costs to the plurality of BFR-Prefixes to obtain a plurality of path costs, the method further comprises:
storing the plurality of path costs in a storage space of the other devices.

6. The message advertisement method according to claim 3, wherein the determining a target cost from the plurality of path costs according to a preset rule comprises one of the following:
determining a minimum path cost among the plurality of path costs, and determining the minimum path cost as the target cost;
determining a plurality of identical path costs among the plurality of path costs, and determining the plurality of identical path costs as the target cost; and
determining the minimum path cost among the plurality of path costs, determining a sub-optimal path cost among the plurality of path costs, and determining the minimum path cost and the sub-optimal path cost as the target cost.

7. The message advertisement method according to claim 6, wherein after advertising the second advertisement protocol message to other devices within a domain, the method further comprises:
determining a plurality of reachable BFR-Prefixes corresponding to the Anycast BFR-ID when a failure occurs in an intra-domain network;
determining the minimum path cost among the path costs corresponding to the plurality of reachable BFR-Prefixes; and
updating a next-hop device corresponding to the minimum path cost recorded in the forwarding table to the next-hop device corresponding to the minimum path cost among the path costs.

8. The message advertisement method according to claim 6, wherein after advertising the second advertisement protocol message to other devices within a domain, the method further comprises:
forwarding the multicast traffic through the next-hop device corresponding to the sub-optimal path cost recorded in the forwarding table when a failure occurs in an intra-domain network.

9. The message advertisement method according to claim 6, wherein after determining a target cost from the plurality of path costs according to a preset rule and taking the device corresponding to the target cost as the next-hop device for reaching the Anycast BFR-ID in the forwarding table, the method further comprises:
distributing and forwarding the multicast traffic through the plurality of next-hop devices which are in one-to-one correspondence with the plurality of identical paths recorded in the forwarding table.

10. A message advertisement apparatus, comprising:
an adding module configured to add a forwarding router identifier Anycast BFR-ID corresponding to dual-homing bit-forwarding egress router, BFER, devices to a TLV field of a first advertisement protocol message, so as to obtain a second advertisement protocol message, wherein the dual-homing BFER devices comprise a first BFER device and a second BFER device; the dual-homing BFER devices are configured to forward multicast traffic to the same receiving device; and the advertisement protocol message comprises a bit-forwarding router prefix, BFR-Prefix, of the first BFER device or the BFR-Prefix of the second BFER device; and
an advertisement module configured to advertise the second advertisement protocol message to other devices within a domain.

11. A computer-readable storage medium, wherein a computer program is stored in the storage medium, and the computer program is configured to implement the method as claimed in any one of claims 1 to 9 when running.

12. An electronic device, comprising a memory and a processor, wherein a computer program is stored in the memory, and the processor is configured to execute the computer program to perform the method as claimed in any one of claims 1 to 9.
